# EUROPÄISCHE PATENTSCHRIFT

(11) **EP 1 701 888 B1**
(45) Veröffentlichungstag und Bekanntmachung des Hinweises auf die Patenterteilung: **16.01.2008**
(21) Anmeldenummer: 04796933.2
(22) Anmeldetag: 04.11.2004
(51) Int. Cl.: B65B 41/12, B65H 19/18, B29C 65/18

(54) **VERFAHREN ZUM WECHSELN VON SCHLAUCHROLLEN**
METHOD FOR CHANGING ROLLS OF TUBULAR FILM
PROCEDE POUR CHANGER DES ROULEAUX DE FILM TUBULAIRE

(30) Priorität: 04.11.2003 AT 17482003; 22.07.2004 AT 12512004
(43) Veröffentlichungstag der Anmeldung: 20.09.2006
(73) Patentinhaber: Deininger, Karl, 8680 Mürzzuschlag (AT)
(72) Erfinder: Deininger, Karl, 8680 Mürzzuschlag (AT)
(74) Vertreter: Henhapel, Bernhard
(86) Internationale Anmeldenummer: PCT/AT2004/000388
(87) Internationale Veröffentlichungsnummer: WO 2005/042348

(56) Entgegenhaltungen:
- EP-A- 1 201 585
- DE-A1- 10 240 644
- US-A- 5 679 207

## Beschreibung

Die Erfindung bezieht sich auf ein Verfahren zum Verbinden eines Anfangsabschnittes eines bandförmigen Folienschlauches mit einem Endabschnitt eines zweiten Folienschlauches, insbesondere für Verpackungsanlagen, gemäß dem Oberbegriff von Anspruch 1 sowie eine Verpackungsanlage gemäß dem Oberbegriff von Anspruch 8.

Folienschläuche sind in der Regel auf Rollenträger aufgewickelt, die drehbar gelagert sind und von denen der Folienschlauch abgewickelt und weiteren Verarbeitungsschritt.en zugeführt wird. Ein auf einem Rollenträger aufgewickelter Folienschlauch wird im folgenden auch als Schlauchrolle bezeichnet. Folienschläuche werden in Verpackungsanlagen in vielfältiger Weise verwendet, etwa in Absackanlagen zum Verpacken von Gütern in Säcken, oder in Pallettieranlagen zum Umspannen von auf Paletten gelagerten Gütern.

In Absackanlagen etwa wird von einer solchen Schlauchrolle der Folienschlauch abgewickelt und in folgenden Anlagenabschnitten mit Material befüllt. Dazu muss der zunächst bandförmig vorliegende Folienschlauch geöffnet werden, um seine Befüllung zu ermöglichen. Das erfolgt etwa mithilfe eines Dorns, der in axialer Richtung innerhalb des Folienschlauches positioniert ist, sodass der Folienschlauch beim Passieren des Dorns geöffnet wird. Eine solche Konfiguration wird auch als "fliegender Dorn" bezeichnet, da der Dorn im Inneren des Folienschlauches in stabiler Lagerung gehalten werden muss. Alternativ zu einem solchen fliegenden Dorn finden auch Keile, Schwerter oder Vakuumsauger Verwendung, insbesondere bei der Verarbeitung von Schlitzfaltensäcken.

Die mithilfe des Dorns geschaffene Öffnung des Folienschlauches steht nun zur Befüllung mit Gütern etwa in Absackanlagen oder zur Umhüllung von Gütern etwa in Pallettieranlagen zur Verfügung. In Absackanlagen wird der betreffende Folienschlauchabschnitt beidseitig des eingefüllten Materials z.B. mithilfe spezieller Schweißverfahren verschlossen und das abgepackte Gut kann abtransportiert werden.

Dabei stellt sich insbesondere das Problem des Rollenträgerwechsels bei vollständigem Verbrauch eines auf dem Rollenträger aufgewickelten Folienschlauches. In herkömmlicher Weise wird hierzu die Verpackungsanlage gestoppt, der Rollenträger der verbrauchten Schlauchrolle entfernt und stattdessen eine neue Schlauchrolle bereitgestellt. Der Anfangsabschnitt der neuen Schlauchrolle wird in weiterer Folge händisch in einer der Schlauchrolle unmittelbar nachfolgenden Positionier- und Spannstation eingesetzt und den weiteren Anlagenabschnitten zugeführt. Insbesondere wird der Dorn oder Keil bzw. das Schwert in den Anfangsabschnitt der neuen Schlauchrolle manuell eingeführt. Erst wenn der Dorn, der Keil oder das Schwert eingesetzt wurde, kann die Verpackungsanlage wieder gestartet werden.

Der Wechsel eines Rollenträgers bedingt somit längere Stillstandszeiten der Gesamtanlage. Dabei ist zu bemerken, dass Schlauchrollen in der Regel etwa 1800 Säcke aufweisen, die Verarbeitungsgeschwindigkeit von Absackanlagen aber bei etwa 1800-2400 Säcken pro Stunde liegt. Somit ist in weniger als einer Stunde eine Schlauchrolle aufgebraucht. Der Wechsel der Schlauchrolle nimmt aber etwa 10-20 Minuten in Anspruch. Die Absackanlage steht daher während ihres Betriebs bis zu einem Drittel ihrer Betriebsdauer still. Dabei bewirken zunehmende Verarbeitungsgeschwindigkeiten für Folienschläuche eine zunehmende Verschlechterung des Verhältnisses zwischen Arbeitszeit und Stillstandszeit der Anlage.

Daher wurde vorgeschlagen, die Folienschläuche von Herstellerseite nicht auf Rollenträger aufzuwickeln, sondern spezielle Behältnisse vorzusehen, in denen das bandförmige Verpackungsmaterial gefaltet angeordnet ist, sodass während einer Zufuhr des ersten Endes zur Verpackungsanlage das zweite Ende des bandförmigen Verpackungsmaterials zumindest zeitweise ruht und von außerhalb des Behältnisses zugänglich ist. Dadurch ist es etwa während der Zufuhr des ersten Endes möglich, mit dem anderen Ende zu hantieren und es insbesondere mit einem Ende eines bandförmigen Verpackungsmaterials eines nachfolgenden, zweiten Behältnisses händisch zu verbinden. Somit wird bei vollständiger Entnahme des Verpackungsmaterials aus dem ersten Behältnis automatisch die Entnahme aus dem zweiten Behältnis gestartet. Bereits beim Anfahren der Verpackungsanlage können zwei Enden von Verpackungsmaterial, die sich in zwei aufeinanderfolgenden Behältnissen befinden, miteinander verbunden werden, sodass je nach Anzahl der beteiligten Behältnisse ein beliebiger Vorrat an Verpackungsmaterial zur Verfügung steht, ohne dass die Verpackungsanlage gestoppt werden müsste.

Für die gefaltete Anordnung des bandförmigen Verpackungsmaterials wurden unterschiedliche Möglichkeiten vorgeschlagen, so kann die gefaltete Anordnung in Form eines Stapels erfolgen, bei dem jeweils zwei an eine Faltkante angrenzende Stapelebenen des bandförmigen Verpackungsmaterials im wesentlichen horizontal aufeinander liegen. Das erste Ende des bandförmigen Verpackungsmaterials kann in diesem Fall an die oberste Stapelebene angrenzen, und das zweite Ende das bandförmigen Verpackungsmaterials an die unterste Stapelebene, sodass beginnend mit dem der Verarbeitungsanlage zugeführten Ende des Verpackungsmaterials das Material vom oberen Bereich des. Stapels abgenommen wird. Das zuletzt der Verarbeitungsanlage zugeführte Ende kann etwa von unten entlang einer seitlichen Begrenzung des Behältnisses bis in den Bereich der obersten Stapelebene hochgezogen sein, wo es etwa über die obere Begrenzung des Behälters hervorragt. Alternativ hierzu kann aber auch im unteren Bereich des Behältnisses eine Entnahmeöffnung für das zweite Ende vorgesehen sein. Diese Maßnahmen sind aber nur in jenen Fällen möglich, wo das bandförmige Verpackungsmaterial tatsächlich in gefalteter Anordnung vorliegt.

In der EP 1 201 585 A1 wurde daher vorgeschlagen, den Anfangsabschnitt einer neuen Schlauchrolle trapezförmig zuzuschneiden, die so gebildeten Lappen über den Endabschnitt einer nicht weiter zugeschnittenen, alten Schlauchrolle zu legen, und sie gemeinsam zu verbinden. Da der Endabschnitt der alten Schlauchrolle gemäß der EP 1 201 585 A1 nicht trapezförmig zur Bildung aufklappbarer Lappen zugeschnitten wird, kann die Erstellung einer zugfesten Verbindung etwa durch Verschweißen nur erfolgen, indem innerhalb des ablaufenden Folienschlauches ein Gegenlager geführt wird. Dieses Gegenlager muss innerhalb des ablaufenden Folienschlauches aber auch in Position gehalten werden, wozu die EP 1 201 585 A1 Führungsrollen vorsieht. Eine Anordnung dieser Art, bei der ein innerhalb des ablaufenden Folienschlauches permanent über Führungsrollen geführtes Gegenlager vorgesehen ist, bringt aber zumindest zwei gravierende Nachteile mit sich. Zum Einen müssen insbesondere die Führungsrollen innerhalb des ablaufenden Folienschlauches geschmiert werden, sodass ein Einsatz des Verfahrens gemäß der EP 1 201 585 A1 etwa für Absackanlagen für Lebens- bzw. Futtermittel bedenklich ist. Zum Anderen wird durch ein Verfahren gemäß der EP 1 201 585 A1 die Folienbandgeschwindigkeit entscheidend beschränkt, da der Wärmeübertrag auf das innerhalb des ablaufenden Folienschlauches geführten Gegenlagers ansonsten zu groß wäre. Insbesondere würde örtlich die Plastizitätsgrenze der üblicherweise für Folienschläuche verwendeten Kunststoffe erreicht, sodass es etwa bei Folienstillstand zwangsläufig zu ungewollten Verschweißungen zwischen dem Gegenlager bzw. dessen Führungsrollen und der Folie kommen kann.

Es ist daher das Ziel der Erfindung, längere Stillstandszeiten der Gesamtanlage bei einem Wechsel der Schlauchrolle zu vermeiden, ohne dabei die Verarbeitungsgeschwindigkeit der Gesamtanlage zu verringern. Insbesondere ist es das Ziel, dass nach dem Verbinden des alten mit dem neuen Folienschlauch wiederum ein Schlauch entsteht, dessen Öffnungsquerschnitt an der Verbindungsstelle nicht oder nur unwesentlich vermindert wird. Dieses Ziel wird durch die kennzeichnenden Merkmale von Anspruch 1 bzw. 8 erreicht.

Anspruch 1 sieht hierbei vor, dass zum Verbinden eines Anfangsabschnittes eines bandförmigen Folienschlauches mit einem Endabschnitt eines zweiten, sich über nachfolgende Verarbeitungsstationen, insbesondere einer Verpackungsanlage, zumindest teilweise bandförmig erstreckenden Folienschlauches bei den zu verbindenden Anfangs- und Endabschnitten der beiden Folienschläuche durch Schnittsetzung jeweils zumindest ein aufklappbarer Lappen gebildet wird, wobei die Lappen der Anfangs- und Endabschnitte übereinander gelegt und zugfest miteinander verbunden werden. Dadurch wird erreicht, dass der Folienschlauch der verbrauchten Schlauchrolle gemeinsam mit dem Folienschlauch der neuen Schlauchrolle wieder einen annähernd kontinuierlichen Folienschlauch bildet, der sich über die Gesamtanlage erstreckt. Hierzu ist es nicht notwendig, dass der Verbindungsabschnitt einen dichten Schlauchabschnitt bildet, da der Verbindungsabschnitt nicht unbedingt für die Befüllung verwendet werden muss. Er muss aber eine zugfeste Verbindung darstellen, damit die beiden verbundenen Folienschläuche problemlos durch die weiteren Anlagenabschnitte geführt werden können und insbesondere der Dorn vom alten Folienschlauch in den neuen Folienschlauch problemlos übergeführt werden kann. Insbesondere stellt das erfindungsgemäße Verfahren sicher, dass nach dem Verbinden der beiden Folienschläuche wieder ein Schlauch entsteht, dessen Öffnungsquerschnitt an der Verbindungsstelle nicht oder nur unwesentlich vermindert wird.

Für die Erstellung einer solchen zugfesten Verbindung ist gemäß Anspruch 1 vorgesehen, durch Schnittsetzung zumindest einen aufklappbaren Lappen bei Anfangs- und Endabschnitt zu bilden. Eine solche Schnittsetzung kann auf unterschiedliche Weise erfolgen. So können etwa gemäß Anspruch 2 die beiden zu verbindenden Anfangs- und Endabschnitte zunächst jeweils quer zur Längserstreckung der Folienschläuche abgeschnitten werden, um danach die so entstandenen Eckbereiche der Anfangs- und Endabschnitte in einem spitzen Winkel zur Längserstreckung der Folienschläuche abzuschneiden, sodass an den zu verbindenden Anfangs- und Endabschnitten jeweils zwei Lappen entstehen, die sich endseitig verjüngen. Wie unmittelbar ersichtlich ist, sind diese Lappen aufklappbar, wobei die endseitige Verjüngung die Handhabung der Lappen erleichtert. Insbesondere kann gemäß Anspruch 3 vorgesehen sein, dass die Schnittsetzung quer zur Längserstreckung der Folienschläuche in einem rechten Winkel zur Längserstreckung erfolgt, sodass sich die Lappen an den Anfangs- und Endabschnitten der beiden Folienschläuche trapezförmig verjüngen.

Gemäß Anspruch 4 ist vorgesehen, dass die zugfeste Verbindung der Anfangs- und Endabschnitte der Folienschläuche durch Verschweißen gebildet wird. Insbesondere haben sich hierzu gemäß Anspruch 5 Schweißverfahren auf der Basis von Ultraschall als vorteilhaft erwiesen.

Die erzeugten Lappen an den Anfangs- und Endabschnitten müssen von den Folienschläuchen abgehoben, in Position gehalten und wieder zurück verschwenkt werden. Hierzu hat sich gemäß Anspruch 6 als vorteilhaft erwiesen, dass die Lappen der zu verbindenden Anfangs- und Endabschnitte der Folienschläuche mittels Unterdruck angesaugt und verschwenkt werden.

Wie bereits erwähnt wurde, werden bevorzugt Schweißverfahren zum Herstellen einer zugfesten Verbindung verwendet. Eine vorteilhafter Arbeitsvorgang wird in Anspruch 7 festgelegt, dem zu Folge zum Verschweißen der Anfangs- und Endabschnitte der Folienschläuche ein Lappen des Anfangsabschnittes auf einen Schweißamboss aufgelegt und von diesem mittels Unterdruck angesaugt wird, und ein Lappen des Endabschnittes auf dem am Schweißamboss befindlichen Lappen aufgelegt und mit diesem verschweißt wird.

Anspruch 8 bezieht sich auf eine Verpackungsanlage mit einem Rollenträger, auf dem ein Folienschlauch aufgewickelt ist, einer Positionier- und Spannstation, die den Folienschlauch vom Rollenträger abwickelt und nachfolgenden Anlagenabschnitten zuführt, einer Verpackungseinheit zum Verarbeiten eines Folienschlauchabschnittes sowie einer Fördereinrichtung zum Abtransport verpackter. Güter. Erfindungsgemäß ist hierbei vorgesehen, dass zum Verbinden eines Anfangsabschnittes des auf dem Rollenträger bandförmig aufgewickelten Folienschlauches mit einem Endabschnitt eines zweiten, sich über nachfolgende Verarbeitungsstationen zumindest teilweise bandförmig erstreckenden Folienschlauches zwischen der Positionier- und Spannstation sowie der Verpackungseinheit eine erste Schneidvorrichtung, wo der Endabschnitt des alten Folienschlauches zur Bildung zumindest eines hochklappbaren Lappens zugeschnitten wird, eine weitere Schneidvorrichtung, wo der Anfangsabschnitt des neuen Folienschlauches abgeschnitten wird, sowie eine zusätzliche Schneidvorrichtung, wo der Anfangsabschnitt des neuen Folienschlauches zur Bildung zumindest eines hochklappbaren Lappens zugeschnitten wird, angeordnet sind, sowie eine Verschweißstation zum Verbinden der auf einem Schweißamboss aufeinander gelegten Lappen von Anfangsabschnitt und Endabschnitt vorgesehen ist. Die Schneidvorrichtung dient somit für die Schnittsetzung gemäß Anspruch 1, und die Verschweißstation für die Herstellung einer zugfesten Verbindung. Gemäß Anspruch 9 handelt es sich hierbei um eine Ultraschall-Schweißanlage. Gemäß Anspruch 10 sind des weiteren Saugschwenker zwischen der Positionier- und Spannstation sowie der Abfüllstation angeordnet, die zum Verschwenken der Lappen am Anfangs- bzw. Endabschnitt dienen.

Die Erfindung wird nun anhand der beiliegenden Figuren näher erläutert. Es zeigen hierbei
Fig. 1a eine schematische Darstellung einer Verpackungsanlage mit fliegendem Dorn gemäß dem Sand der Technik,
Fig. 1b eine schematische Darstellung einer Verpackungsanlage mit Vakuumsaugern gemäß dem Sand der Technik,
Fig. 1c eine schematische Darstellung einer Verpackungsanlage mit Keil gemäß dem Sand der Technik,
Fig. 2a eine schematische Darstellung einer erfindungsgemäßen Verpackungsanlage mit Rollenmagazin, Schneid- und Schweißeinheit, Spann- und Puffereinheit sowie der Verpackungseinheit in einem Verfahrensschritt, bei dem der Anfangsabschnitt einer neuen Schlauchrolle manuell in die Positionier- und Spannstation des Rollenmagazins eingesetzt wird und der Endabschnitt der alten Rolle zugeschnitten wird,
Fig. 2b die schematische Darstellung gemäß Fig. 2a von oben gesehen,
Fig. 3a eine schematische Darstellung gemäß Fig. 2 für jenen Verfahrensschritt, bei dem der Anfangsabschnitt der neuen Rolle in der Positionier- und Spannstation von einem Saugschwenker erfasst wird,
Fig. 3b die schematische Darstellung gemäß Fig. 3a von oben gesehen,
Fig. 4a eine schematische Darstellung gemäß Fig. 2 für jenen Verfahrensschritt, bei dem die Lappen des Endabschnittes der alten Rolle hochgeklappt werden,
Fig. 4b die schematische Darstellung gemäß Fig. 4a von oben gesehen,
Fig. 5a eine schematische Darstellung gemäß Fig. 2 für jenen Verfahrensschritt, bei dem der Anfangsabschnitt der neuen Rolle zugeschnitten wird,
Fig. 5b die schematische Darstellung gemäß Fig. 5a von oben gesehen,
Fig. 6 eine schematische Darstellung von Anfangs- und Endabschnitt der beiden zu verbindenden Folienschläuche von oben gesehen, in der eine mögliche Schnittsetzung ersichtlich ist,
Fig. 7a eine schematische Darstellung gemäß Fig. 2 für jenen Verfahrensschritt, bei dem die Lappen des Anfangsabschnittes der neuen Rolle hochgeklappt werden und der Schweißamboss eingeschoben wird,
Fig. 7b die schematische Darstellung gemäß Fig. 7a von oben gesehen,
Fig. 8a eine schematische Darstellung gemäß Fig. 2 für jenen Verfahrensschritt, bei dem die Lappen des Anfangsabschnittes der neuen Rolle auf den Schweißamboss gesetzt werden,
Fig. 8b die schematische Darstellung gemäß Fig. 8a von oben gesehen,
Fig. 9a eine schematische Darstellung gemäß Fig. 2 für jenen Verfahrensschritt, bei dem die für das Hantieren der Lappen des Anfangsabschnittes der neuen Rolle vorgesehenen Saugschwenker weggeschwenkt werden,
Fig. 9b die schematische Darstellung gemäß Fig. 9a von oben gesehen,
Fig. 10a eine schematische Darstellung gemäß Fig. 2 für jenen Verfahrens schritt, bei dem die Lappen des Endabschnittes der alten Rolle auf die Lappen des Anfangsabschnittes der neuen Rolle aufgesetzt werden und mit ihnen verschweißt werden,
Fig. 10b die schematische Darstellung gemäß Fig. 10a von oben gesehen,
Fig. 11a eine schematische Darstellung gemäß Fig. 2 für jenen Verfahrensschritt, bei dem die Schweißvorrichtung sowie die Saugschwenker von den Folienschläuchen weggeklappt wurden,
Fig. 11b die schematische Darstellung gemäß Fig. 11a von oben gesehen,
Fig. 12a eine schematische Darstellung gemäß Fig.. 2 für jenen Verfahrens schritt, bei dem der Schweißamboss seitlich herausgezogen wurde und die zugfeste Verbindung zwischen den zu verbindenden Folienschläuchen fertiggestellt ist,
Fig. 12b die schematische Darstellung gemäß Fig. 12a von oben gesehen, und
Fig. 13a-c unterschiedliche Ausführungsvarianten eines Rollenmagazins.

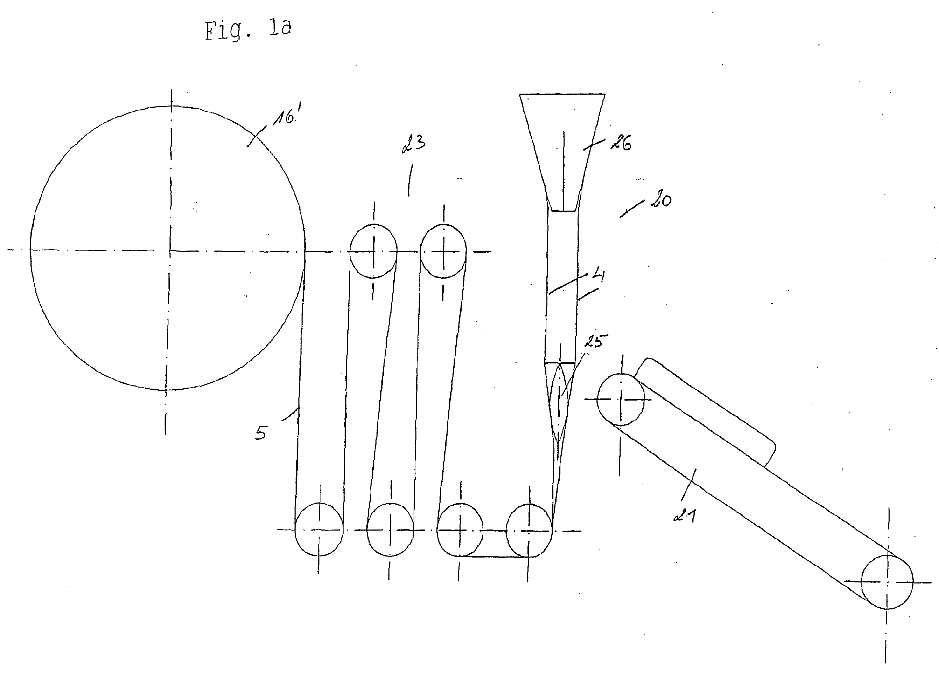

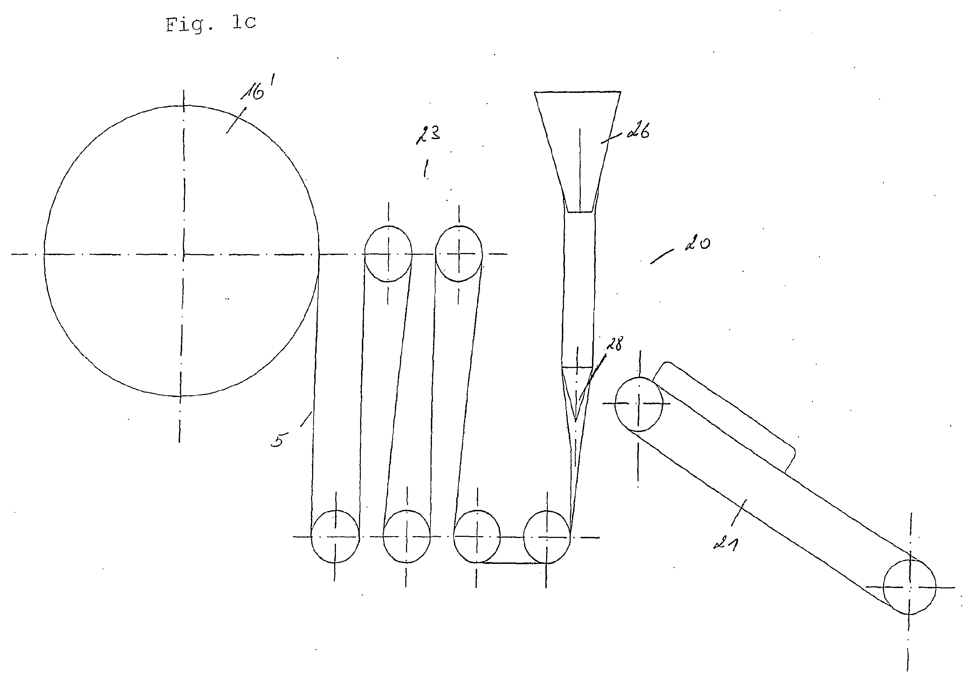

Fig. 1a-c zeigt eine schematische Darstellung einer herkömmlichen Absackanlage mit einer Schlauchrolle 16', einer Spann- und Puffereinheit 23, einer Befüllungseinheit 20 sowie einem Förderer 21. In der Befüllungseinheit 20 ist es vor dem Befüllen erforderlich, den Folienschlauch 5 zu öffnen, was mithilfe eines in den Folienschlauch 5 eingesetzten Dorns 25 bewerkstelligt wird. Der Folienschlauch 5 kann nun etwa über einen Fülltrichter 26 befüllt werden. Beidseits des befüllten Abschnittes wird der Folienschlauch 5 abgeschnitten und die Enden verschweißt. Das abgepackte Gut kann in weiterer Folge vom Förderer 21 abtransportiert werden. Die Arbeitsschritte in solchen Anlagen verlaufen automatisiert und werden von Anlagensteuerungssystemen gesteuert.

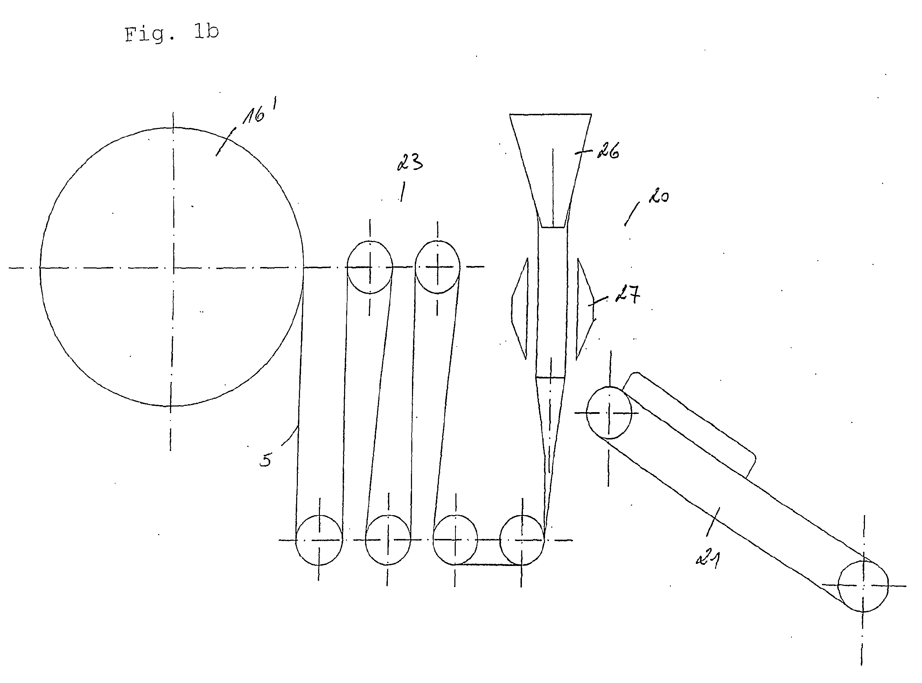

Fig. 1b zeigt eine weitere Ausführungsvariante einer herkömmlichen Absackanlage, bei der anstelle des Dorns 25 Vakuumsauger 27 zum Öffnen des Folienschlauches 5 verwendet werden, was sich insbesondere bei Schlitzfaltensäcken empfiehlt. In Fig. 1c wird schematisch die Verwendung eines Keils 28 gezeigt. Bei all diesen Ausführungsvarianten stellt sich das Problem des Rollenträgerwechsels bei vollständigem Verbrauch eines auf dem Rollenträger 1 aufgewickelten Folienschlauches 5. In herkömmlicher Weise wird hierzu die Verpackungsanlage gestoppt, der Rollenträger 1 der verbrauchten Schlauchrolle 16' entfernt und stattdessen eine neue Schlauchrolle 16 bereitgestellt. Der Anfangsabschnitt der neuen Schlauchrolle 16 wird in weiterer Folge händisch in einer der Schlauchrolle 16 unmittelbar nachfolgenden Spann- und Puffereinheit 23 eingesetzt und den weiteren Anlagenabschnitten zugeführt. Insbesondere wird der Dorn 25 oder der Keil bzw. das Schwert 28 in den Anfangsabschnitt der neuen Schlauchrolle 16 manuell eingeführt. Erst wenn der Dorn 25 oder der Keil bzw. das Schwert 28 eingesetzt wurde, kann die Verpackungsanlage wieder gestartet werden, was längere Stillstandszeiten der Gesamtanlage bedingt.

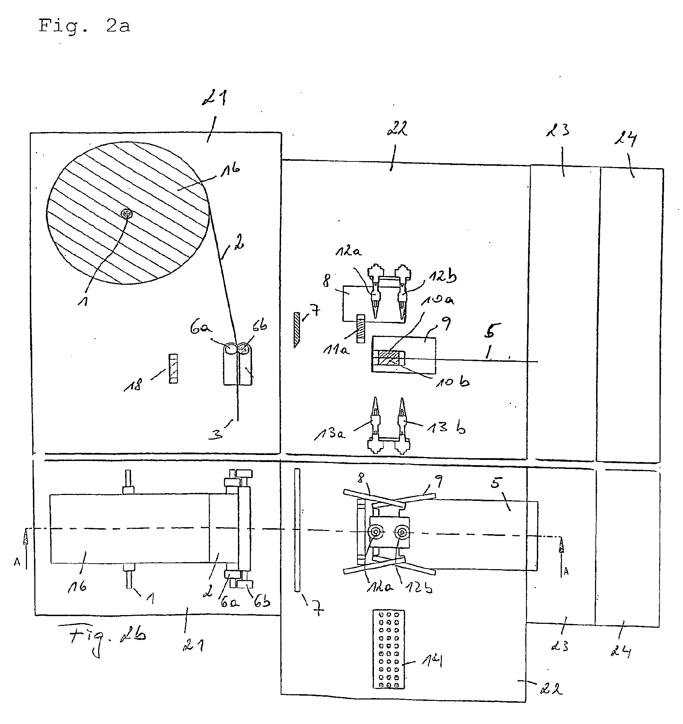

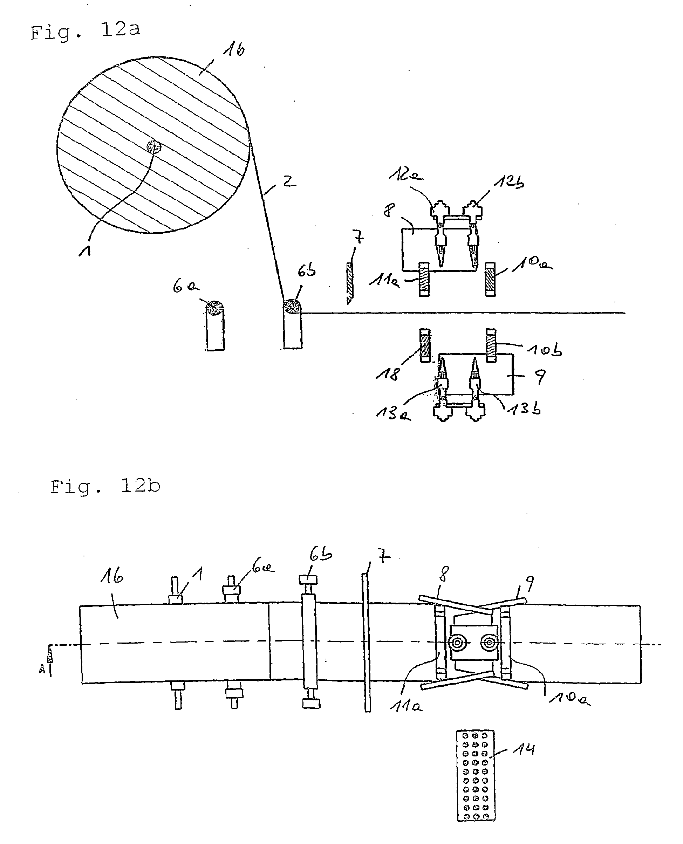

Diese Stillstandszeiten können erfindungsgemäß durch Anordnung einer Schneidvorrichtung 7, 8, 9 sowie einer Verschweißstation 12, 13 vermieden werden, wie anhand der folgenden Fig. 2 bis 12 erläutert wird.

Fig. 2 zeigt hierbei schematisch eine Übersicht über die Gesamtanlage mit dem neuen Folienschlauch 2, der auf der neuen Schlauchrolle 16 bandförmig aufgewickelt ist, Schneidvorrichtungen 7, 8, 9, Verschweißstation 12, 13, Puffereinheit 23 und der Verpackungseinheit 24. Bei der Verpackungseinheit 24 kann es sich etwa um eine Befüllungseinheit einer Absackanlage handeln, oder um eine Verpackungseinheit zum Umhüllen von Palletten mithilfe eines Folienschlauches 5. Im Unterschied zu herkömmlichen Anlagen gemäß Fig. 1a-c sind erfindungsgemäß zwischen der Spann- und Positioniereinheit 6a, 6b des Rollenmagazins 21 sowie der Puffereinheit 23 Schneidvorrichtungen 7, 8, 9 und eine Verschweißstation 12, 13 vorgesehen.

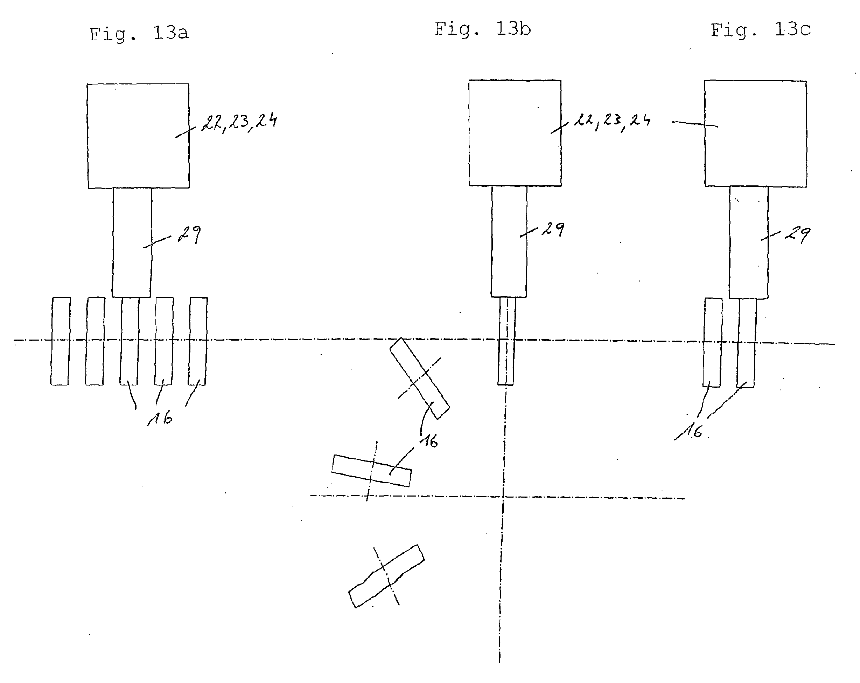

Die neue Schlauchrolle 16 wird vom einem Rollenmagazin 21 herangeführt, für das unterschiedliche Ausführungsvarianten denkbar sind. So zeigt etwa Fig. 13a ein Linearrollenmagazin, bei dem die Schlauchrollen 16 koaxial ausgerichtet sind und nacheinander einem Wechsler 29 zugeführt werden. Der Wechsler 29 entnimmt eine Schlauchrolle 16 dem Linearrollenmagazin und positioniert sie gegenüber den übrigen Anlagenabschnitten 22, 23, 24 so, dass der Anfangsabschnitt 3 der neuen Schlauchrolle 16 den übrigen Anlagenabschnitten 22, 23, 24 zugeführt werden kann. Fig. 13b zeigt als alternative Ausführungsform eines Rollenmagazins ein Karussellrollenmagazin, bei der die Schlauchrollen 16 kreisförmig angeordnet sind. Gemäß Fig. 13c kann auch ein Paternoster-Aufzug vorgesehen sein, sodass die Schlauchrollen 16 auch in einer zur Bildebene von Fig. 13c senkrechten Richtung bewegbar sind.

Der Anfangsabschnitt 3 des neuen Folienschlauches 2 einer neuen Schlauchrolle 16 wird in einer Zuführeinrichtung des Wechslers 29 so positioniert und fixiert, dass der Anfangsabschnitt 3 in definierter Lage herabhängt, wobei er gegen elektromagnetische Störeinflüsse gut geschützt ist. Der Anfangsabschnitt 3 wird in weiterer Folge von der Spannrolle 6a sowie der Zuführrolle 6b erfasst (Fig. 2).

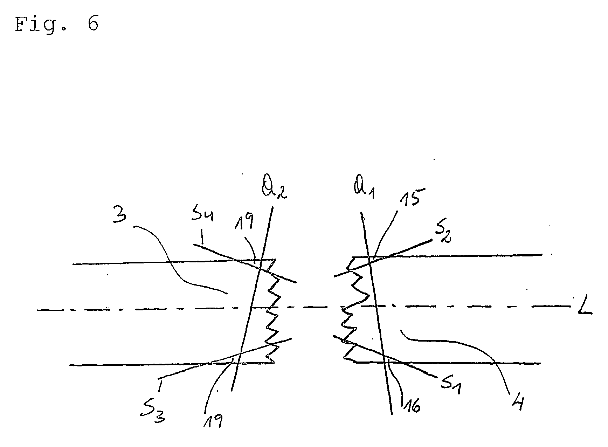

Während dieses Arbeitsschrittes wird der Endabschnitt 4 des alten Folienschlauches 5 beidseitig mithilfe der Saugschwenker 10a, 10b pneumatisch erfasst und auf einer ersten Schneidvorrichtung 9 positioniert, wo der Endabschnitt 4 zugeschnitten wird. Der Schnittvorgang wird hierbei so gewählt werden, dass zumindest ein hochklappbarer Lappen 4a, 4b am Endabschnitt 4 entsteht. Ein bevorzugte Schnittsetzung besteht darin, dass der Endabschnitt 4 zunächst quer zur Längserstreckung L des Folienschlauches 5, vorzugsweise im rechten Winkel, entlang einer Schnittlinie Q₁ abgeschnitten wird (siehe auch Fig. 6). Dieser Schnittvorgang empfiehlt sich insbesondere bei unförmigen Endabschnitten 4. In weiterer Folge werden die so entstandenen Eckbereiche 15 in einem spitzen Winkel zur Längserstreckung L des Folienschlauches 5 entlang der Schnittlinien S₁ und S₂ abgeschnitten, sodass ein oberer Lappen 4a und ein unterer Lappen 4b entstehen, die sich jeweils endseitig verjüngen. Es ist nun einerseits unmittelbar ersichtlich, dass sich der spitze Winkel zur Längserstreckung L in Richtung des Folienschlauches 5 öffnen muss, da ansonsten keine hochklappbaren Lappen 4a, 4b gebildet werden können, und dass andererseits die Schnittlinie Q₁ auch entfallen kann, falls die Schnittlinien S₁ und S₂ so gewählt werden, dass deren Schnittpunkt innerhalb des Folienschlauches 5 zu liegen kommt.

Alternativ dazu könnte der Folienschlauch 5 an seinem Anfangsabschnitten 4 aber auch lediglich axial aufgeschlitzt werden, wodurch sich ebenfalls aufklappbare Lappen 4a, 4b ergäben. Je nach Anforderungen und den jeweiligen Verarbeitungsumständen können somit unterschiedliche Schnittsetzungen vorteilhaft sein.

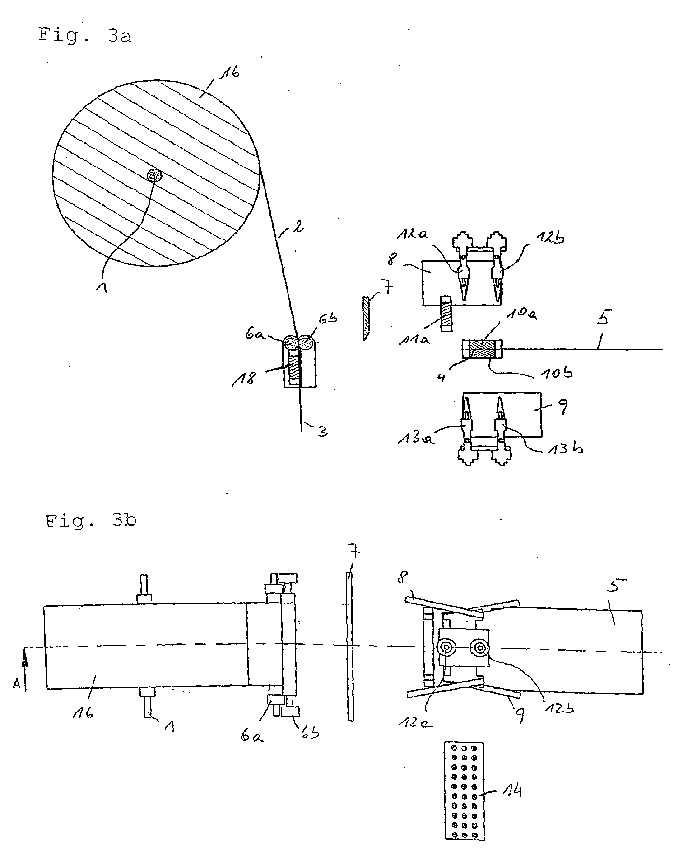

In Fig. 3 ist ein weiterer Arbeitsschritt dargestellt, bei dem der Anfangs abschnitt 3 des neuen Folienschlauches 2 pneumatisch von einem Saugschwenker 18 erfasst und mithilfe der Spannrolle 6a gegen die Zuführrolle 6b gepresst wird. Des weiteren wird die Schneidvorrichtung 9 weggeschwenkt, wobei die Lappen 4a, 4b des Endabschnittes 4 in definierter Lage gehalten werden.

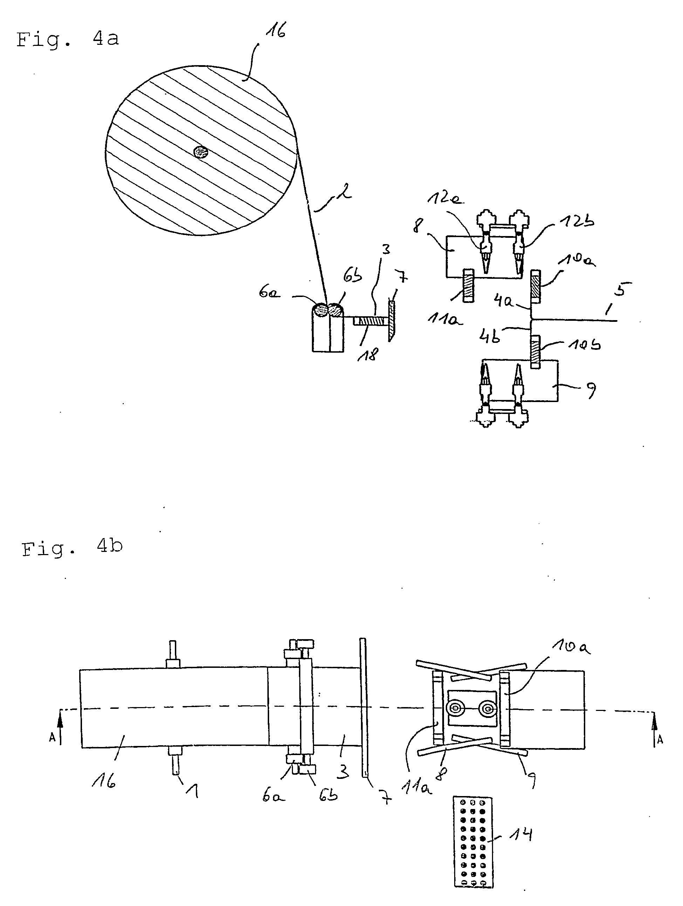

Fig. 4 zeigt, wie daraufhin der Anfangsabschnitt 3 mithilfe des Saugschwenkers 18 der Schneidvorrichtung 7 zugeführt wird, wo der Anfangsabschnitt 3 quer zur Längserstreckung L des Folienschlauches 2, vorzugsweise im rechten Winkel, entlang der Schnittlinie Q₂ abgeschnitten wird (siehe auch Fig. 6). Dieser Schnittvorgang empfiehlt sich insbesondere bei unförmigen Anfangsabschnitten 3, wobei die Eckbereiche 19 gebildet werden (Fig. 6). Die Lappen 4a und 4b des Endabschnittes 4 des alten Folienschlauches 5 werden unterdessen mithilfe der Saugschwenker 10a und 10b hochgeklappt.

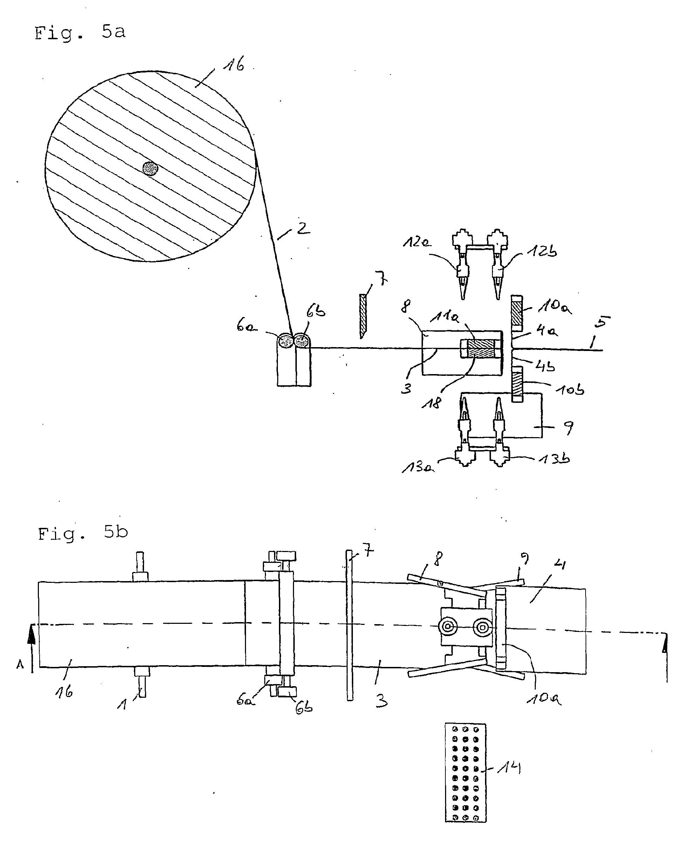

Gemäß Fig. 5 wird der Anfangsabschnitt 3 des neuen Folienschlauches 2 der Schneidvorrichtung 8 zugeführt, wobei der Schnittvorgang wiederum so gewählt werden wird, dass zumindest ein hochklappbarer Lappen 3a, 3b am Anfangsabschnitt 3 entsteht. Ein bevorzugte Schnittsetzung besteht darin, dass die Eckbereiche 19 in einem spitzen Winkel zur Längserstreckung L des Folienschlauches 2 entlang der Schnittlinien S₃ und S₄ abgeschnitten werden, sodass ein oberer Lappen 3a und ein unterer Lappen 3b entstehen, die sich jeweils endseitig verjüngen. Es ist nun einerseits unmittelbar ersichtlich, dass sich der spitze Winkel zur Längserstreckung L in Richtung des Folienschlauches 2 öffnen muss, da ansonsten keine hochklappbaren Lappen 3a, 3b gebildet werden können, und dass andererseits die Schnittlinie Q₂ auch entfallen kann, falls die Schnittlinien S₃ und S₄ so gewählt werden, dass deren Schnittpunkt innerhalb des Folienschlauches 2 zu liegen kommt.

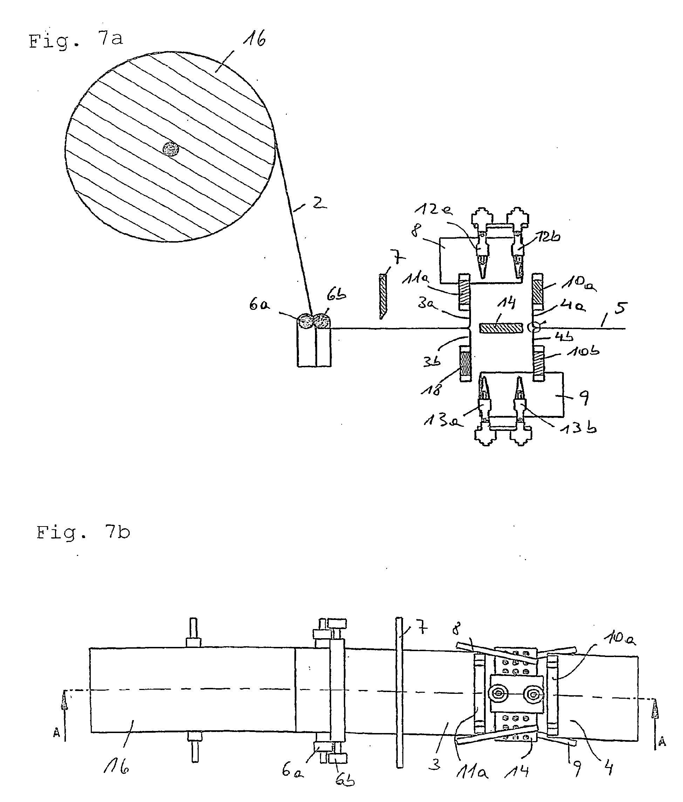

Nun können gemäß Fig. 7 mithilfe der Saugschwenker 11a und 18 die Lappen 3a und 3b des Folienschlauches 2 hochgeklappt werden. In dieser Positionierung der Lappen 4a, 4b, 3a und 3b kann ein Schweißamboss 14 seitlich eingeschoben werden, um das nun folgende Verschweißen der beiden Folienschläuche 2 und 5 zu ermöglichen.

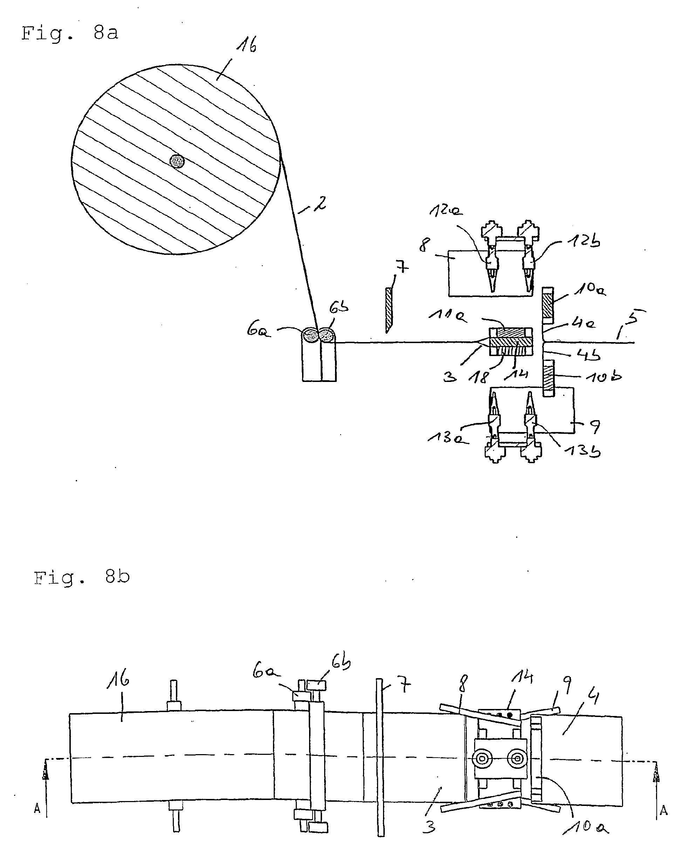

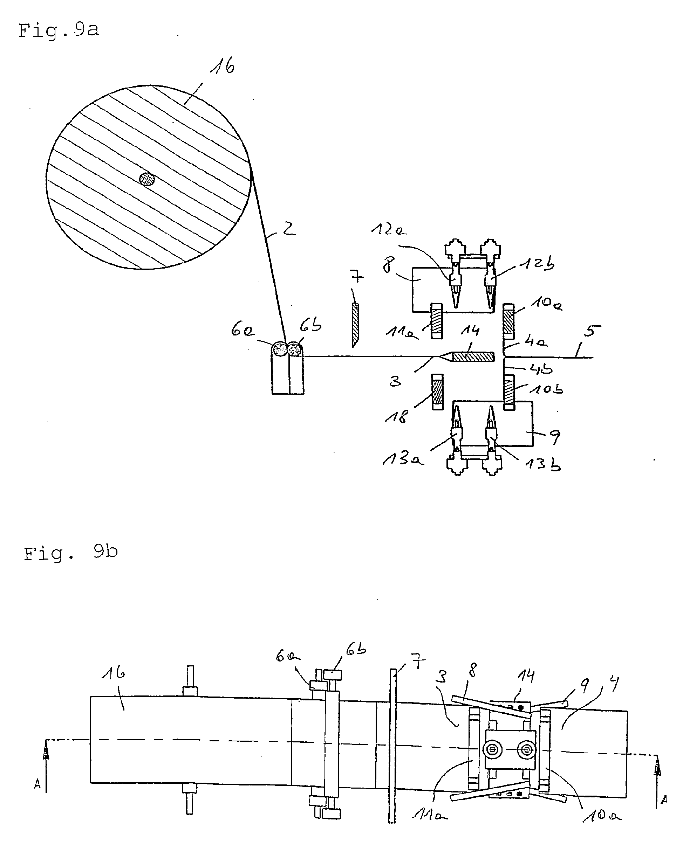

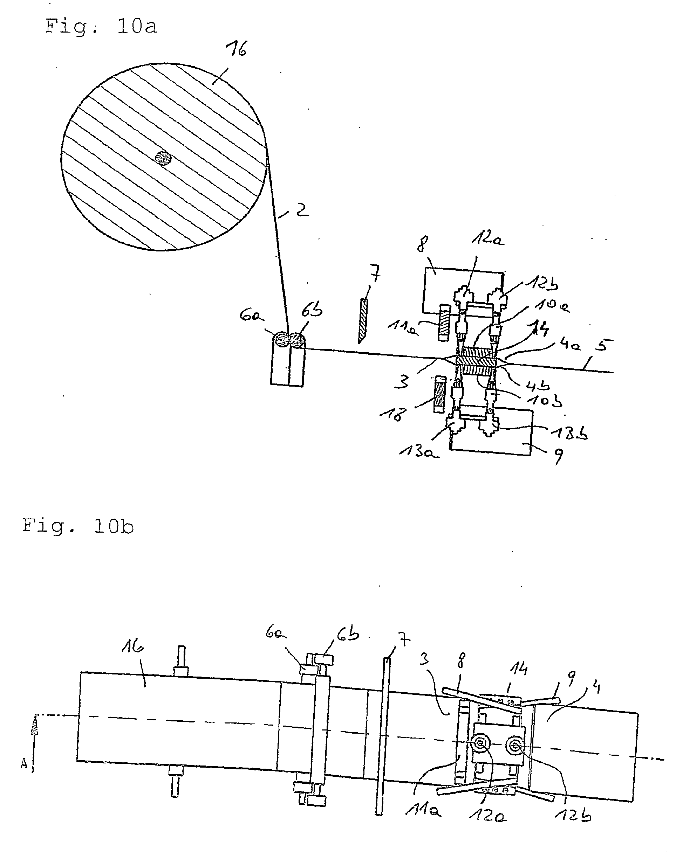

Wie in Fig. 8 dargestellt ist, werden daraufhin die Lappen 3a und 3b mithilfe der Saugschwenker 11a und 18 auf den Schweißamboss 14 aufgelegt und von diesem pneumatisch erfasst. Gemäß Fig. 9 können die Saugschwenker 11a und 18 in weiterer Folge weggeschwenkt werden. Nun können gemäß Fig. 10 mithilfe der Saugschwenker 10a und 10b die Lappen 4a und 4b des Endabschnittes 4 des alten Folienschlauches 5 auf die Lappen 3a und 3b des Anfangsabschnittes 3 des neuen Folienschlauches 2 gelegt werden. Das Schweißwerkzeug 12, 13 kann in dieser Positionierung der Lappen 3a, 3b, 4a und 4b auf dem Schweißamboss 14 nun in Richtung der Folienschläuche.2 und 5 bewegt werden. Vorzugsweise handelt es sich hierbei um ein Schweißgerät auf der Basis von Ultraschall, wobei die Schweißwerkzeuge 12a, 12b sowie 13a und 13b auch als Sonotroden bezeichnet werden. Diese Sonotroden 12a, 12b 13a, 13b werden mit Druck auf die Lappen 3a, 3b, 4a, 4b aufgesetzt, die mithilfe von Ultraschall in Schwingung versetzt werden. Die Eingangsleistung des Ultraschallschweißgerätes wird dabei insbesondere in Abhängigkeit von der Foliendicke und der Folienbeschaffenheit gewählt, um Probleme mit Abkühlung und Verklebungen zu vermeiden. In den Berührungsbereichen stellt sich daraufhin eine Relativbewegung der Lappen 3a und 4a bzw. der Lappen 3b und 4b ein, die zu Wärmeentwicklung und in weiterer Folge zum Plastifizieren, d.h. zum Aufschmelzen des Kunststoffmaterials, führt. Der Kunststoff wird somit mittels mechanischer Schwingungen verbunden.

Es sind prinzipiell auch andere Methoden der Herstellung einer zugfesten Verbindung denkbar, etwa über Klammern oder durch Kleben. So wäre es etwa prinzipiell denkbar, die Oberfläche des Anfangsabschnittes 3 des neuen Folienschlauches 2 mit Klebstoff zu versehen und den Endabschnitt 4 des alten Folienschlauches 5 darüber zu stülpen. Allerdings müsste hierzu der Klebstoff hinreichend schnell abbinden, was bei gegenwärtig erhältlichen Klebstoffen nicht der Fall ist.

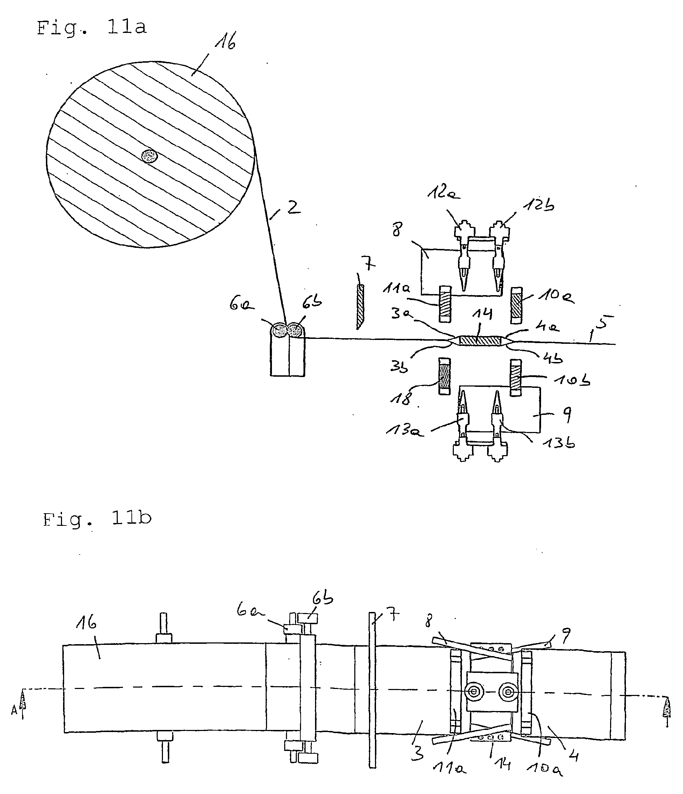

Nach Beendigung des Schweißvorganges können gemäß Fig. 11 die Sonotroden 12a, 12b, 13a und 13b zurückgezogen und die Saugschwenker 10a und 10b weggeklappt werden. Als letzter Verfahrensschritt kann nun der Schweißamboss 14 seitlich herausgezogen werden, wodurch die Verbindungsstelle 17 freigegeben wird. Diese Verbindungsstelle 17 weist zwar in ihren Randbereichen jeweils einen dreiecksförmigen Ausschnitt auf und ist somit nicht dicht, stellt aber eine zugfeste Verbindung dar. Die beiden verbundenen Folienschläuche 2 und 5 können somit problemlos durch die weiteren Anlagenabschnitte geführt werden. Insbesondere stellt das erfindungsgemäße Verfahren sicher, dass nach dem Verbinden der beiden Folienschläuche 2 und 5 wieder ein Schlauch entsteht. Das erfindungsgemäße Verfahren erlaubt außerdem eine genaue Verschweißung der beiden Folienschläuche 2 und 5, was für die Vermeidung von Schiefläufen des verbundenen Folienschlauches entscheidend ist. Der Folienschlauch 2, 5 selbst weist jedoch relativ große Toleranzen auf, die durch das erfindungsgemäße Verfahren aber kompensiert werden können. Das erfindungsgemäße Verfahren kann dabei bei Anlagen mit fliegendem Dorn 25 als auch bei Anlagen mit Keil bzw. Schwert 28 oder Vakuumsaugern 27 eingesetzt werden.

Mithilfe des erfindungsgemäßen Verfahrens können somit längere Stillstandszeiten der Gesamtanlage bei einem Wechsel der Schlauchrolle vermieden werden, ohne dass die Verarbeitungsgeschwindigkeit der Gesamtanlage nennenswert herabgesetzt werden würde.

## Patentansprüche

1. Verfahren zum Verbinden eines Anfangsabschnittes (3) eines auf einem Rollenträger (1) bandförmig aufgewickelten Folienschlauches (2) mit einem Endabschnitt (4) eines zweiten, sich über nachfolgende Verarbeitungsstationen, insbesondere einer Verpackungsanlage, zumindest teilweise bandförmig erstreckenden Folienschlauches (5), **dadurch gekennzeichnet, dass** bei den zu verbindenden Anfangs- und Endabschnitten (3, 4) der beiden Folienschläuche (2, 5) durch Schnittsetzung jeweils zumindest ein aufklappbarer Lappen (3a, 3b, 4a, 4b) gebildet wird, wobei die Lappen (3a, 3b, 4a, 4b) der Anfangs- und Endabschnitte (3, 4) übereinander gelegt werden und zugfest miteinander verbunden werden.

2. Verfahren nach Anspruch 1, **dadurch gekennzeichnet, dass** die Schnittsetzung so erfolgt, dass die beiden zu verbindenden Anfangs- und Endabschnitte (3, 4) jeweils quer zur Längserstreckung (L) der Folienschläuche (2, 5) abgeschnitten werden, und die so entstandenen Eckbereiche (15) der Anfangs- und Endabschnitte (3, 4) in einem spitzen Winkel zur Längserstreckung (L) der Folienschläuche (2, 5) abgeschnitten werden, sodass an den zu verbindenden Anfangs- und Endabschnitten (3, 4) jeweils zwei Lappen (3a, 3b, 4a, 4b) entstehen, die sich endseitig verjüngen.

3. Verfahren nach Anspruch 2, **dadurch gekennzeichnet, dass** die Schnittsetzung quer zur Längserstreckung (L) der Folienschläuche (2, 5) in einem rechten Winkel zur Längserstreckung (L) erfolgt, sodass sich die Lappen (3a, 3b, 4a, 4b) an den Anfangs- und Endabschnitten (3, 4) der beiden Folienschläuche (2, 5) trapezförmig verjüngen.

4. Verfahren nach einem der Ansprüche 1 bis 3, **dadurch gekennzeichnet, dass** die zugfeste Verbindung der Anfangs- und Endabschnitte (3, 4) der Folienschläuche (2, 5) durch Verschweißen gebildet wird.

5. Verfahren nach Anspruch 4, **dadurch gekennzeichnet, dass** das Verschweißen mittels Ultraschall erfolgt.

6. Verfahren nach einem der Ansprüche 1 bis 5, **dadurch gekennzeichnet, dass** die Lappen (3a, 3b, 4a, 4b) der zu verbindenden Anfangs- und Endabschnitte (3, 4) der Folienschläuche (2, 5) mittels Unterdruck angesaugt und verschwenkt werden.

7. Verfahren nach einem der Ansprüche 3 bis 5, **dadurch gekennzeichnet, dass** zum Verschweißen der Anfangs- und Endabschnitte (3, 4) der Folienschläuche (2, 5) ein Lappen (3a, 3b) des Anfangsabschnittes (3) auf einen Schweißamboss (14) aufgelegt und von diesem mittels Unterdruck angesaugt wird, und ein Lappen (4a, 4b) des Endabschnittes (4) auf dem am Schweißamboss (14) befindlichen Lappen (3a, 3b) aufgelegt und mit diesem verschweißt wird.

8. Verpackungsanlage mit einem Rollenträger (1), auf dem ein Folienschlauch (2) aufgewickelt ist, einer Positionier- und Spannstation (6a, 6b), die den Folienschlauch (2) vom Rollenträger (1) abwickelt und nachfolgenden Anlagenabschnitten zuführt, einer Verpackungseinheit (20) zum Verarbeiten eines Folienschlauchabschnittes sowie einer Fördereinrichtung (21) zum Abtransport verpackter Güter, **dadurch gekennzeichnet, dass** zum Verbinden eines Anfangsabschnittes (3) des auf dem Rollenträger (1) bandförmig aufgewickelten Folienschlauches (2) mit einem Endabschnitt (4) eines zweiten, sich über nachfolgende Verarbeitungsstationen zumindest teilweise bandförmig erstreckenden Folienschlauches (5) zwischen der Positionier- und Spannstation (6a, 6b) sowie der Verpackungseinheit (20) eine erste Schneidvorrichtung (9), wo der Endabschnitt (4) des alten Folienschlauches (5) zur Bildung zumindest eines hochklappbaren Lappens (4a, 4b) zugeschnitten wird, eine weitere Schneidvorrichtung (7), wo der Anfangsabschnitt (3) des neuen Folienschlauches (2) abgeschnitten wird, sowie eine zusätzliche Schneidvorrichtung (8), wo der Anfangsabschnitt (3) des neuen Folienschlauches (2) zur Bildung zumindest eines hochklappbaren Lappens (3a, 3b) zugeschnitten wird, angeordnet sind, sowie eine Verschweißstation (12, 13) zum Verbinden der auf einem Schweißamboss (14) aufeinander gelegten Lappen (3a, 3b, 4a, 4b) von Anfangsabschnitt (3) und Endabschnitt (4) vorgesehen ist.

9. Verpackungsanlage nach Anspruch 8, **dadurch gekennzeichnet, dass** es sich bei der Verschweißstation (12, 13) um eine Ultraschall-Schweißanlage handelt.

10. Verpackungsanlage nach Anspruch 8 oder 9, **dadurch gekennzeichnet, dass** zwischen der Positionier- und Spannstation (6a, 6b) sowie der Verpackungseinheit (20) Saugschwenker (10, 11) angeordnet sind.

## Claims

1. A method for joining an initial section (3) of a film tube (2) which is wound up in a band-like manner on a reel (1) with an end section (4) of a second film tube (5) extending over subsequent processing stations, especially a packaging system, in an at least partly band-like manner, **characterized in that** at least one upwardly pivoting tab (3a, 3b, 4a, 4b) each is formed by the placement of a cut in the initial and end sections (3, 4) of the two film tubes (2, 5) to be joined, with the tabs (3a, 3b, 4a, 4b) of the initial and end sections (3, 4) being placed above one another and joined in a tension-proof way with each other.

2. A method according to claim 1, **characterized in that** the placing of the cut occurs in such a way that the two initial and end sections (3, 4) to be joined are each cut off transversally to the longitudinal extension (L) of the film tubes (2, 5) and the corner regions (15) of the initial and end sections (3, 4) thus produced are cut off at an acute angle relative to the longitudinal extension (L) of the film tubes (2, 5), so that two tabs (3a, 3b, 4a, 4b) each are produced at the initial and end sections (3, 4) to be joined which taper at the end side.

3. A method according to claim 2, **characterized in that** the placement of the cut occurs transversally to the longitudinal extension (L) of the film tubes (2, 5) at a right angle to the longitudinal extension (L), so that the tabs (3a, 3b, 4a, 4b) taper in a trapezoid manner in the initial and end sections (3, 4) of the two film tubes (2, 5).

4. A method according to one of the claims 1 to 3, **characterized in that** the tension-proof connection of the initial and end sections (3, 4) of the film tubes (2, 5) is formed by welding.

5. A method according to claim 4, **characterized in that** the welding occurs by means of ultrasonic sound.

6. A method according to one of the claims 1 to 5, **characterized in that** the tabs (3a, 3b, 4a, 4b) of the joined initial and end sections (3, 4) of the film tubes (2, 5) are sucked up and pivoted by means of negative pressure.

7. A method according to one of the claims 3 to 5, **characterized in that** for welding the initial and end sections (3, 4) of the film tubes (2, 5) a tab (3a, 3b) of the initial section (3) is placed on a welding anvil (14) and is sucked up by the same by means of negative pressure, and a tab (4a, 4b) of the end section (4) is placed on the tab (3a, 3b) situated on the welding anvil (14) and is welded together with the same.

8. A packaging system with a reel (1) on which a film tube (2) is wound up, a positioning and tensioning station (6a, 6b) which unwinds the film tube (2) from the reel (1) and supplies the same to subsequent sections of the system, a packaging unit (20) for processing a film tube section and a conveying device (21) for removing packaged goods, **characterized in that** for joining an initial section (3) of a film tube (2) which is wound up in a band-like manner on a reel (1) with an end section (4) of a second film tube (5) extending over subsequent processing stations in an at least partly band-like manner a first cutting apparatus (9) is arranged between the positioning and tensioning station (6a, 6b) and the packaging unit (20) where the end section (4) of the old film tube (5) is cut in such a way that at least one upwardly pivoting tab (4a, 4b) is produced, a further cutting apparatus (7) where the initial section (3) of the new film tube (2) is cut off, and an additional cutting apparatus (8) where the initial section (3) of the new film tube (2) is cut in such a way that at least one upwardly pivoting tab (3a, 3b) is produced, and a welding station (12, 13) is provided for joining the tabs (3a, 3b, 4a, 4b) of the initial section (3) and the end section (4) being placed above one another on a welding anvil (14).

9. A packaging system according to claim 8, **characterized in that** the welding station (12, 13) concerns an ultrasonic welding station.

10. A packaging system according to claim 8 or 9, **characterized in that** pivoting suction means (10, 11) are arranged between the positioning and tensioning station (6a, 6b) and the packaging unit (20).

## Revendications

1. Procédé pour l'assemblage d'une partie de début (3) d'un tube de film (2) enroulé en forme de bande sur un support à rouleau (1) avec une partie de fin (4) d'un deuxième tube de film (5) s'étendant au moins partiellement sur des postes de traitement suivants, en particulier dans une installation d'emballage, **caractérisé en ce qu'**au moins un rabat pouvant être ouvert (3a, 3b, 4a, 4b) est formé dans les parties de début et de fin (3, 4) à assembler des deux tubes de film (2, 5) par une découpe, lesquels rabats (3a, 3b, 4a, 4b) des parties de début et de fin (3, 4) sont posés l'un par-dessus l'autre et assemblés de manière résistante à la traction.

2. Procédé selon la revendication 1, **caractérisé en ce que** la découpe est pratiquée de telle sorte que les deux parties de début et de fin (3, 4) à assembler sont découpées chacune perpendiculairement à l'étendue longitudinale (L) des tubes de film (2, 5), et les zones de coin (15) des parties de début et de fin (3, 4) ainsi formées sont découpées à angle aigu par rapport à l'étendue longitudinale (L) des tubes de film (2, 5), de sorte que l'on obtient dans chacune des parties de début et de fin (3, 4) à assembler deux rabats (3a, 3b, 4a, 4b) dont la largeur diminue à l'extrémité.

3. Procédé selon la revendication 2, **caractérisé en ce que** la découpe est effectuée perpendiculairement à l'étendue longitudinale (L) des tubes de film (2, 5) à angle droit par rapport à l'étendue longitudinale (L), de sorte que les rabats (3a, 3b, 4a, 4b) des parties de début et de fin (3, 4) des deux tubes de film (2, 5) se resserrent en forme de trapèze.

4. Procédé selon l'une des revendications 1 à 3, **caractérisé en ce que** l'assemblage résistant à la traction entre les parties de début et de fin (3, 4) des tubes de film (2, 5) est réalisé par soudage.

5. Procédé selon la revendication 4, **caractérisé en ce que** le soudage est réalisé au moyen d'ultrasons.

6. Procédé selon l'une des revendications 1 à 5, **caractérisé en ce que** les rabats (3a, 3b, 4a, 4b) des parties de début et de fin (3, 4) à assembler des tubes de film (2, 5) sont aspirés et soudés sous basse pression.

7. Procédé selon l'une des revendications 3 à 5, **caractérisé en ce que** pour souder les parties de début et de fin (3, 4) des tubes de film (2, 5), un rabat (3a, 3b) de la partie de début (3) est posé sur une enclume de soudage (14) et aspiré par celle-ci au moyen d'une dépression, et un rabat (4a, 4b) de la partie de fin (4) est posé sur le rabat (3a, 3b) qui se trouve sur l'enclume de soudage (14) et soudé à celui-ci.

8. Installation d'emballage avec un support à rouleau (1) sur lequel un tube de film (2) est enroulé, un poste de positionnement et de mise en tension (6a, 6b) qui déroule le tube de film (2) du support à rouleau (1) et l'amène aux parties suivantes de l'installation, une unité d'emballage (20) pour le traitement d'une partie de tube de film et une installation de transport (21) pour l'évacuation de marchandises emballées, **caractérisée en ce que** pour assembler une partie de début (3) du tube de film (2) enroulé en forme de bande sur le support à rouleau (1) avec une partie de fin (4) d'un deuxième tube de film (5) s'étendant au moins partiellement en forme de bande sur les postes de traitement suivants, il est prévu entre le poste de positionnement et de mise en tension (6a, 6b) et l'unité d'emballage (20) un premier dispositif de coupe (9), où la partie de fin (4) de l'ancien tube de film (5) est découpée pour former au moins un rabat (4a, 4b) pouvant être ouvert, un autre dispositif de coupe (7), où la partie de début (3) du nouveau tube de film (2) est découpée, et un dispositif de coupe supplémentaire (8), où la partie de début (3) du niveau tube de film (2) est recoupée pour former au moins un rabat (3a, 3b) pouvant être ouvert, ainsi qu'un poste de soudage (12, 13) pour l'assemblage des rabats (3a, 3b, 4a, 4b) de la partie de début (3) et de la partie de fin (4) posés l'un sur l'autre sur une enclume de soudage (14).

9. Installation d'emballage selon la revendication 8, **caractérisée en ce que** le poste de soudage (12, 13) est une installation de soudage par ultrasons.

10. Installation d'emballage selon la revendication 8 ou 9, **caractérisée en ce qu'**il est prévu entre le poste de positionnement et de mise en tension (6a, 6b) et l'unité d'emballage (20) des buses d'aspiration pivotantes (10, 11).
